# EUROPÄISCHE PATENTSCHRIFT

(11) **EP 1 998 916 B1**
(45) Veröffentlichungstag und Bekanntmachung des Hinweises auf die Patenterteilung: **15.07.2009**
(21) Anmeldenummer: 07710500.5
(22) Anmeldetag: 05.03.2007
(51) Int. Cl.: B23B 27/10, B23Q 11/10, F25B 9/04

(54) **SCHNEIDWERKZEUG**
CUTTING TOOL
OUTIL DE COUPE

(30) Priorität: 07.03.2006 AT 1732006 U
(43) Veröffentlichungstag der Anmeldung: 10.12.2008
(73) Patentinhaber: Ceratizit Austria Gesellschaft M.B.H., 6600 Reutte (AT)
(72) Erfinder: STEINER, Michael, A-6600 Breitenwang (AT)
(86) Internationale Anmeldenummer: PCT/AT2007/000109
(87) Internationale Veröffentlichungsnummer: WO 2007/101283

(56) Entgegenhaltungen:
- JP-A- 2 024 040
- US-A- 5 103 701

## Beschreibung

Die Erfindung betrifft ein Schneidwerkzeug zur spanabhebenden Bearbeitung mit einer Zuführung eines kalten Gasstromes zur Kühlung des unmittelbaren Zerspanungsbereiches.

Insbesondere bei der Zerspanung von metallischen Werkstoffen kommt es im unmittelbaren Zerspanungsbereich zu einer erheblichen Temperaturentwicklung, was zu einem frühzeitigen Verschleiß bzw. Ausfall des Zerspanungswerkzeuges führen kann. Um diese Temperaturentwicklung in Grenzen zu halten und gleichzeitig die Ausbringung der Späne aus dem Zerspanungsbereich zu verbessern, ist es üblich, den unmittelbaren Zerspanungsbereich des Schneidwerkzeuges durch Zufuhr eines Kühlmittels zu kühlen. Das Kühlmittel kann dabei gasförmig oder flüssig sein und durch innenliegende Zufuhr über das Schneidwerkzeug oder durch Zufuhr über externe Anordnungen zum unmittelbaren Zerspanungsbereich geleitet werden.

Ein Schneidwerkzeug mit innenliegender Zufuhr für ein flüssiges Kühlmittel ist beispielsweise in der WO 02/068142 beschrieben. Ein Schneidewerkzeug gemäß dem Oberbegriff von Anspruch 1 ist z.B. aus der JP02024040 bekannt.

In der DE 196 40 599 A1 ist ein Schneidwerkzeug mit einer innenliegenden Kühlmittelzufuhr beschrieben, bei dem gekühlte Luft zur Kühlung des unmittelbaren Zerspanungsbereiches verwendet wird. Nachteilig bei diesem Schneidwerkzeug ist, dass die kalte Luft nicht innerhalb des Werkzeuges, sondern außerhalb des Schneidwerkzeuges hergestellt werden muss und dafür wiederum externe Einrichtungen bereitgestellt werden müssen.

Die Herstellung von kalten Gasen in einem Kälteerzeuger, welche nach dem Joule-Thomson-Effekt durch Zufuhr von komprimiertem Gas, vorzugsweise Pressluft arbeitet, ist ebenfalls seit langem bekannt. Das Prinzip derartiger Kälteerzeuger basiert auf der Wirkungsweise eines Wirbelrohres. Dem Wirbelrohr wird dabei über einen Gasverwirbler in einer Wirbelkammer Druckluft mit Normaltemperatur und wenigen Bar Druck zugeführt und in einen kalten und heißen Luftstrom geteilt. Die über den Gasverwirbler dem Wirbelrohr zugeführte Druckluft wird entlang der Innenwandung des Wirbelrohres kreisend mit hoher Geschwindigkeit in Richtung einer Heißgasdüse an einem Ende des Wirbelrohres bewegt. Ein Teil der Luft entweicht durch die Heißgasdüse als Heißluftstrom. Die nicht entwichene Luft wird zwangsweise durch die Mitte dieses mit hoher Geschwindigkeit am Rand des Rohres verlaufenden Luftstromes in die entgegengesetzte Richtung mit deutlich langsamerer Geschwindigkeit an das andere Ende des Wirbelrades zurückgeleitet. Dieser innere langsamere Luftstrom gibt Wärme an den äußeren schnelleren Luftstrom ab und kühlt sich bis zum Austritt an einer Kaltgasdüse auf Temperaturen bis zu -40°C ab.
Derartige Kälteerzeuger sind beispielsweise in der US 3 173 273 oder in der US 3 208 229 beschrieben und werden vielfach als externe Anordnung zur externen Zufuhr von Kaltluft in den unmittelbaren Zerspanungsbereich von Schneidwerkzeugen eingesetzt.
Nachteilig dabei ist, dass derartige externe Anordnungen auf jedes Zerspanungswerkzeug individuell ausgerichtet und so fixiert werden müssen, dass auch bei einer Vorschubbewegung des Zerspanungswerkzeuges die zielgerichtete Zuführung des Kühlluftstromes in den unmittelbaren Zerspanungsbereich gewährleistet bleibt. Dies ist jedoch nur mit erheblichem Aufwand erreichbar.

Die Aufgabe der vorliegenden Erfindung ist es daher ein Schneidwerkzeug mit Kühlung des unmittelbaren Zerspanungsbereiches durch einen kalten Gasstrom zu schaffen, bei dem der Einrichtungsaufwand für die exakte Ausrichtung des Gasstromes entfällt.

Erfindungsgemäß wird dies durch ein Schneidwerkzeug gemäß Anspruch 1 erreicht.

Völlig überraschend hat sich herausgestellt, dass die Verlagerung eines Kälteerzeugers, welcher bisher nur für den externen Betrieb vorgesehen war, in den Grundkörper eines Schneidwerkzeuges ohne Nachteile auf dessen Funktionsweise durchführbar ist. Die Weiterleitung des kalten Gasstromes in den unmittelbaren Zerspanungsbereich erfolgt vom Kälteerzeuger aus durch weiterführende Kanäle im Inneren des Schneidwerkzeuges bis zum unmittelbaren Zerspanungsbereich, ohne dass eine immer wiederkehrende Einstellung und Ausrichtung der Kühlmittelzuführung erfolgen muss.
Durch die erfindungsgemäße Ausführung eines Schneidwerkzeuges wird nicht nur der unmittelbare Zerspanungsbereich selbst hervorragend gekühlt, sondern zudem auch noch der gesamte Werkzeuggrundkörper durch den das kalte Gas geführt wird. Dadurch wird die bei der Zerspanung erzeugte Wärme vom Schneideinsatz äußerst rasch abgeleitet, wodurch sich die Standzeit des Schneideinsatzes weiter erhöht und eine Aufbauschneidenbildung verringert wird.

Ein besonders einfacher Einbau in das Innere des Schneidwerkzeuges wird dadurch erreicht, dass der komplette Kälteerzeuger in eine entsprechende Aufnahmebohrung des Werkzeuggrundkörpers eingebaut ist, in welche die weiteren Bohrungen für die Weiterführung des kalten Gases, die Zuführung des komprimierten Gases und die Abführung des heißen Gases einmünden.

Besonders vorteilhaft ist es, wenn die Zufuhr des komprimierten Gases über eine Bohrung im Werkzeuggrundkörper parallel zum Kälteerzeuger erfolgt. Unter diesen Bedingungen ist die Gaszufuhr auf einfache Weise vom Ende des Schneidwerkzeuges her machbar.

Besonders günstig ist es, wenn ein Kälteerzeuger verwendet wird, der mit Luft betrieben wird. Dadurch kann in der Regel die in jeder Fertigung vorhandene Pressluftversorgung eingesetzt werden.

Im Folgenden wird die Erfindung an Hand von Figuren näher erläutert.

Es zeigen:
- Figur 1: ein erfindungsgemäßes Drehwerkzeug, teilweise im Schnitt
- Figur 2: ein Detail des Drehwerkzeuges nach Fig. 1 in vergrößerter Ansicht
- Figur 3: ein weiteres Detail des Drehwerkzeuges nach Fig. 1 in vergrößerter Ansicht
- Figur 4 a-b: der Kaltgasaustritt für das Drehwerkzeug nach Fig. 1 in verschiedenen Ansichten

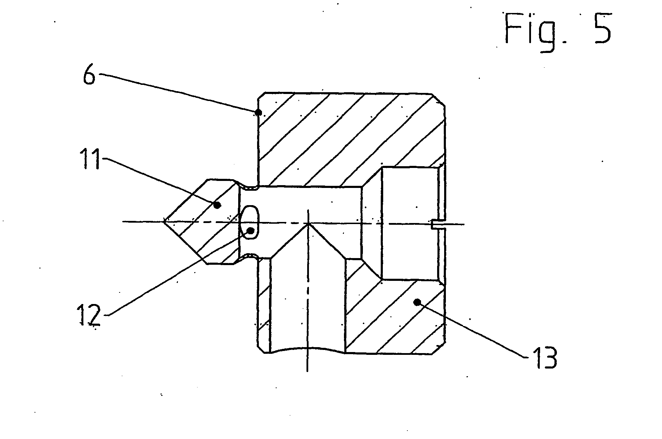

- Figur 5: der Heißgasaustritt für das Drehwerkzeug nach Fig. 1

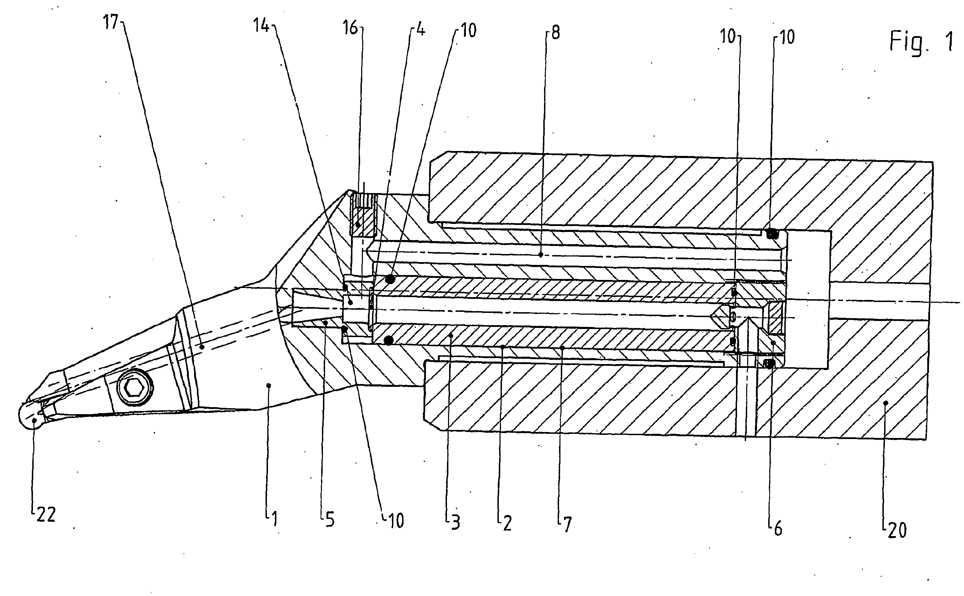

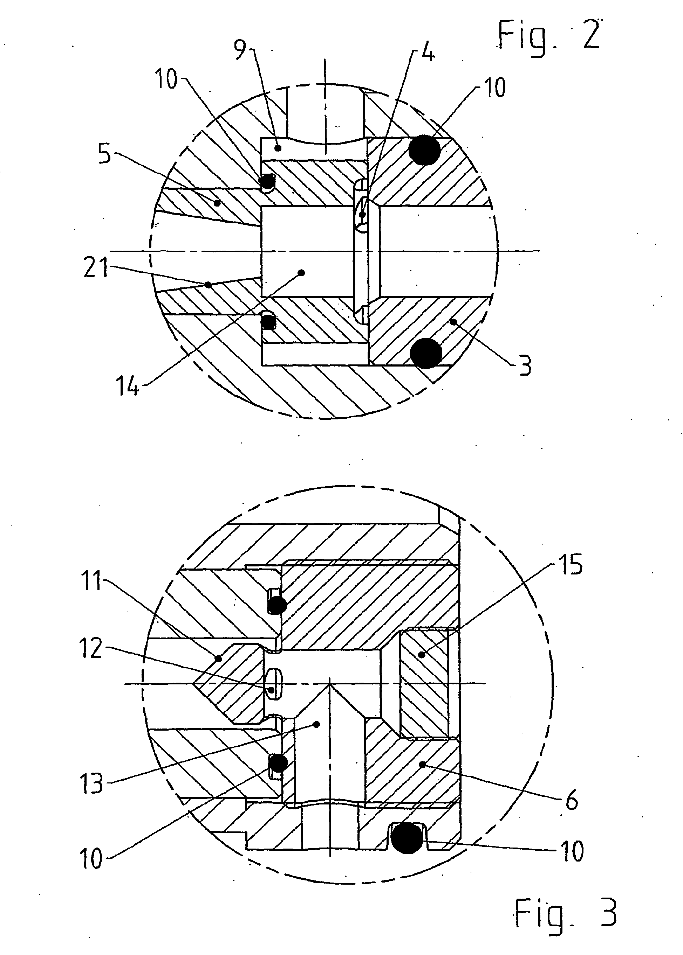

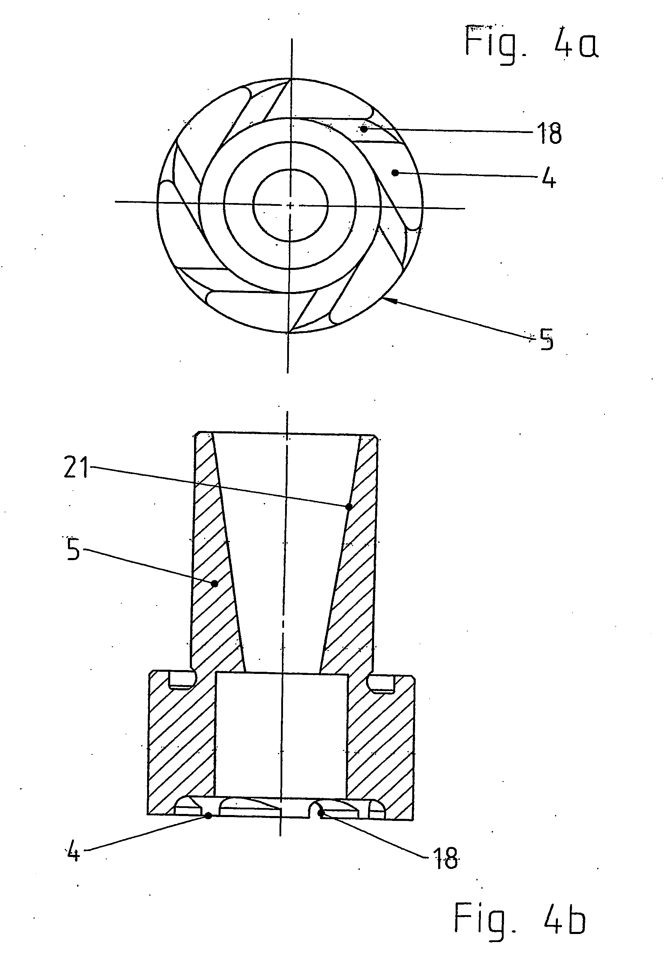

In Figur 1 ist ein Drehwerkzeug mit einem Werkzeuggrundkörper -1- dargestellt, welches in einer Werkzeugaufnahme -20- aufgenommen ist. In einer in den Werkzeuggrundkörper -1- eingebrachten Bohrung -7- ist ein Kälteerzeuger -2-integriert. Der Kälteerzeuger -2- besteht aus einem langgestreckten Wirbelrohr -3- mit einem Kaltgasaustritt -5- an einem Ende und einem Heißgasaustritt -6- am anderen Ende. Der Kaltgasaustritt -5-, der in den Figuren 2 und 4a - 4b noch genauer dargestellt ist, ist einstückig als hohlzylindrisches Teil mit zwei voneinander abgesetzten Abschnitten mit unterschiedlichen Außendurchmessern ausgeführt. Der Abschnitt mit dem größeren Außendurchmesser grenzt direkt an das Wirbelrohr -3- an und bildet mit einer Bohrung, die etwa dem Innendurchmesser des Wirbelrohres -3-entspricht, eine Wirbelkammer -14-. Das an das Wirbelrohr -3- angrenzende Ende des Kaltgasaustrittes -5- ist mit einer Ringfläche mit tangential an die Wirbelkammer -14- angrenzenden Schlitzen -18- abgeschlossen, welche den Gasverwirbler -4- bilden. Der Abschnitt mit dem kleineren Außendurchmesser des Kaltgasaustrittes -5- weist angrenzend an die Wirbelkammer -14- eine sich konisch nach außen zu erweiternde Bohrung -21- auf. Der Abschnitt mit dem größeren Außendurchmesser weist gegenüber der Aufnahmebohrung -7- im Werkzeuggrundkörper -1- einen etwas kleineren Durchmesser auf, so dass eine Ringkammer -9- gebildet wird. In diese Ringkammer -9- mündet eine Bohrung -8- zur Zufuhr eins komprimierten Gases, vorzugsweise in Form von Pressluft ein. Die zunächst parallel zum Wirbelrohr -3- verlaufende Bohrung -8-wird in einen senkrecht zur Ringkammer -9- verlaufenden Abschnitt umgeleitet. Aus fertigungstechnischen Gründen durchsetzt dieser Abschnitt den gesamten Werkzeuggrundkörper -1- und ist zur Außenseite des Werkzeuges hin mit einer Madenschraube -16- verschlossen, um einen Austritt von Pressluft an dieser Stelle nach außen zu verhindern. Die sich konisch erweiternde Bohrung -21-des Kaltgasaustrittes -5- mündet in eine Bohrung -17- des Werkzeuggrundkörpers, welche die Kaltluft bis in unmittelbare Nähe des Schneideinsatzes -22- heranführt. Das Wirbelrohr -3- und der Kaltgasaustritt -5-sind mit Dichtringen -10- gegenüber der Aufnahmebohrung -7- abgedichtet. Der Heißgasaustritt -6- am anderen Ende des Wirbelrohres -3- besteht aus einem zylinderförmigen Grundkörper mit Außengewinde sowie einer zur Abfuhr der Heißluft vorgesehenen, innen liegenden Bohrung -13-, die seitlich umgeleitet und nach rückwärts durch eine Madenschraube -15- verschlossen ist. Der Heißgasaustritt -6- wird in die an dieser Stelle mit einem Innengewinde versehene Aufnahmebohrung -7- eingeschraubt bis sie am Ende des Wirbelrohres -3- anliegt. Zur Abdichtung sind dazwischen noch Dichtringe -10-angeordnet. Zentral weist der Heißgasaustritt -6- einen Kompressionskegel -11-auf, der mit geringem Randabstand in die Bohrung des Wirbelrohres -3-eingreift. Am Auslauf des Kompressionskegels -11- weist dieser Durchbrechungen -12- auf, über welche die Heißluft in die Bohrung -13- zur weiteren Abfuhr nach außen gelangt.

Die Funktionsweise des Kälteerzeugers -2- ist so, dass zunächst über geeignete Zuführungen in der Werkzeugaufnahme -20- und dann über die Bohrung -8- des Drehwerkzeuges Pressluft mit etwa 5 Bar Druck und Raumtemperatur zur Ringkammer -9- des Kälteerzeugers -2- zugeführt wird. In der Ringkammer -9- baut sich dann ein höherer Druck auf, der dann die Luft über die Schlitze -18- des Gasverwirblers -4- in das Wirbelrohr -3- drückt. Der Luftstrom wird durch die tangential angeordneten Schlitze -18- in eine kreisende Bewegung gebracht und bewegt sich entlang der Innenwandung des Wirbelrohres -3- mit hoher Geschwindigkeit auf den Heißgasaustritt -6- am Ende des Wirbelrohres -3- zu. Durch den durch den Kompressionskegel -11-des Heißgasaustrittes -6- verengten Austrittsbereich kann über die Durchbrechungen -12- nur ein Teil der Heißluft entweichen. Die nicht entweichende Luft wird zwangsläufig mittig innerhalb des Hochgeschwindigkeitsluftstromes mit deutlich niedrigerer Geschwindigkeit in Richtung des Kaltgasaustrittes -5- zurückgeführt und gibt dabei stetig Wärme an den äußeren Hochgeschwindigkeitsluftstrom ab. Wenn der innere Luftstrom durch den Kaltgasaustritt -5- austritt hat er dann eine sehr niedrige Temperatur von etwa -40°C erreicht.

## Patentansprüche

1. Schneidwerkzeug zur spanabhebenden Bearbeitung mit einer Zuführung eines kalten Gasstromes zur Kühlung des unmittelbaren Zerspanungsbereiches,
**dadurch gekennzeichnet,**
**dass** das Schneidwerkzeug einen in den Werkzeuggrundkörper integrierten Kälteerzeuger (2) sowie ein innenliegendes Kanalsystem zur Zuführung des kalten Gasstromes aufweist, wobei der Kälteerzeuger (2) aus einem lang gestreckten Wirbelrohr (3) zur Umwandlung eines über einen Gasverwirbler (4) zugeführten komprimierten Gases von Normaltemperatur in einen kalten und warmen Gasstrom, einem Kaltgasaustritt (5) an einem Ende des Wirbelrohres (3), sowie einem Heißgasaustritt (6) am anderen Ende des Wirbelrohres (3), besteht.

2. Schneidwerkzeug zur spanabhebenden Bearbeitung nach Anspruch 1 oder 2, **dadurch gekennzeichnet, dass** der Kälteerzeuger (2) in eine Aufnahmebohrung (7) des Werkzeuggrundkörpers (1) abgedichtet eingebaut ist.

3. Schneidwerkzeug zur spanabhebenden Bearbeitung nach Anspruch 1 oder 2, **dadurch gekennzeichnet, dass** der Werkzeuggrundkörper (1) zur Zufuhr des komprimierten Gases eine Bohrung (8) parallel zum Kälteerzeuger (2) aufweist.

4. Schneidwerkzeug zur spanabhebenden Bearbeitung nach einem der Ansprüche 1 bis 3, **dadurch gekennzeichnet, dass** der Kälteerzeuger (2) mit Luft betrieben wird.

## Claims

1. Cutting tool for machining by chip removal, having a supply of a cold-gas flow for cooling the immediate machine-cutting region,
**characterised**
**in that** the cutting tool has a low-temperature generator (2) integrated into the tool main body and an internal channel system for supplying the cold-gas flow, the low-temperature generator (2) comprising an elongate vortex tube (3) for converting a compressed gas, supplied via a gas vorticiser (4), from a normal temperature into a cold-gas flow and a warm-gas flow, a cold-gas outlet (5) at one end of the vortex tube (3) and a hot-gas outlet (6) at the other end of the vortex tube (3).

2. Cutting tool for machining by chip removal according to Claim 1, **characterised in** the low-temperature generator (2) is built into a receiving bore (7) of the tool main body (1) in a sealed manner.

3. Cutting tool for machining by chip removal according to Claim 1 or 2, **characterised in that** the tool main body (1) has a bore (8) parallel to the low-temperature generator (2) for supplying the compressed gas.

4. Cutting tool for machining by chip removal according to one of Claims 1 to 3, **characterised in that** the low-temperature generator (2) is air-operated.

## Revendications

1. Outil de coupe pour usinage avec enlèvement de copeaux comprenant un système d'admission d'un flux de gaz froid destiné à refroidir la zone immédiate d'enlèvement de copeaux, **caractérisé en ce que** ledit outil de coupe comporte un dispositif (2) de production du froid intégré dans le corps de base (1) de l'outil ainsi qu'un système de conduits internes pour l'admission du flux de gaz froid, le dispositif (2) de production du froid étant composé d'un tube à tourbillonnement (3) très allongé destiné à transformer - par le biais d'un dispositif (4) de tourbillonnement du gaz - un gaz comprimé se trouvant à température ambiante en un flux de gaz froid et un flux de gaz chaud, ledit dispositif (2) de production du froid étant composé, en outre, d'une sortie de gaz froid (5) disposée à l'une des extrémités du tube à tourbillonnement (3) et d'une sortie de gaz chaud (6) disposée à l'autre extrémité du tube à tourbillonnement (3).

2. Outil de coupe pour usinage avec enlèvement de copeaux selon la revendication 1, **caractérisé en ce que** le dispositif (2) de production du froid est incorporé hermétiquement dans un alésage de positionnement (7) pratiqué dans le corps de base (1) de l'outil.

3. Outil de coupe pour usinage avec enlèvement de copeaux selon la revendication 1 ou 2, **caractérisé en ce que** le corps de base (1) de l'outil comprend, parallèlement au dispositif (2) de production du froid, un alésage (8) d'admission du gaz comprimé.

4. Outil de coupe pour usinage avec enlèvement de copeaux selon l'une quelconque des revendications 1 à 3, **caractérisé en ce que** le dispositif (2) de production du froid fonctionne à l'air.
